# EUROPEAN PATENT SPECIFICATION

(11) **EP 1 544 745 B1**
(45) Date of publication and mention of the grant of the patent: **01.10.2014**
(21) Application number: 03029412.8
(22) Date of filing: 19.12.2003
(51) Int. Cl.: G06F 17/24, G06F 3/0484

(54) **System and method for creating an electronic document**
System und Verfahren zur Erzeugung eines elektronischen Dokuments
Système et procédé pour créer un document électronique

(43) Date of publication of application: 22.06.2005
(73) Proprietor: SAP AG, 69190 Walldorf (DE)
(72) Inventor: Weiler, Thomas, 66740 Saarlouis (DE); Kemmer, Johann, 69242 Mühlhausen (DE); Sala, Paola, 69181 Leimen (DE)
(74) Representative: Müller-Boré & Partner Patentanwälte PartG mbB

(56) References cited:
- WO-A-02/084516
- US-A- 5 608 898
- US-A- 5 640 577
- ERIC COFFMAN: "15 seconds: Advanced form presentation and printing with PDF, FDF, ASP and DHTML - Part 1"[Online] 22 August 2001 (2001-08-22), XP002287108 Retrieved from the Internet: URL:http://www.internet.com/icom_cgi/print /print.cgi?url=http://www.15seconds.com/is sue/010822.htm> [retrieved on 2004-07-05]
- GORDON KENT: "How to populate a PDF file's form with data from a web server"[Online] 2 March 2000 (2000-03-02), XP002287109 Retrieved from the Internet: URL:http://web.archive.org/web/20000302044 014/http://www.planetpdf.com/mainpage.asp? WebPageID=369> [retrieved on 2004-07-05]

## Description

### FIELD OF THE INVENTION

The present invention relates to generating electronic documents in a computer environment. In particular, it relates to generating electronic documents that are created based on data filled in an electronic form through interaction of a user with a computer.

### BACKGROUND OF THE INVENTION

Modern work processes carried out in an IT (information technology) environment frequently involve the creation of electronic documents. In the corporate, administrative and industrial sector, huge numbers of electronic documents are created every day.

Often times, an electronic document is created by a user filling out an electronic form displayed on a graphical display device of a computer. Hitherto, nearly all entries for adding data to a form have to be done in separate manual steps. For example, the form may have blank spaces, which the user has to fill in by typing text on a keyboard of the computer.

Manual steps performed by a user are generally prone to errors due to possible fatiguing of the user and fading attentiveness. This is particularly true when the user has to fill out a great number of electronic forms one after another, possibly all of the same type, making fatiguing of the user even more likely and thus slowing down work flows and processes, e.g., in an enterprise. Hence, manual steps are generally counteractive to the aim of accelerating and automating work processes and ensuring high reliability by reducing errors.

US 5,640,577 discloses a data processing system enabling automated forms generation using user-defined function selectors, which are formed by keyboard keys or a telephone handset. The function selectors define tasks that the data processing system has to perform upon actuaction of the respective function selectors. At least some of the function selectors are defined to include coordinate positions of data fields on a data terminal display screen. Upon actuation, a function selector so defined retrieves data displayed on the screen at the predetermined coordinate positions, invokes a form and displays the same on the screen, and fills the retrieved data in predetermined spaces of the form. The data processing system includes application programs adapted to retrieve and display a screen of data on the data terminal screen in response to entry of a client ID. Once the screen of data is displayed, the user may depress a function selector key and effect creation and filling of a form as explained before.

WO 02/084516 A1 relates to transferring information from a local database in a handheld Internet appliance to a web site displayed on the handheld Internet appliance. The software enables users of handheld Internet appliance to automatically transfer information from local databases associated with the local applications in the handheld Internet appliance to web sites containing on-line forms. A user interface is provided in the web site for enabling the user to automatically fill on-line forms with information stored in the handheld Internet appliance.

It is therefore an object of the present invention to enable a reduction in the number of manual steps required by a user to fill out electronic forms for creating electronic documents.

### SUMMARY OF THE INVENTION

To achieve this object, the present invention provides in one aspect a computer-implemented system according to claim 1.

In another aspect, the present invention provides a computer-implemented method for creating an electronic document according to claim 11.

According to yet another aspect, the present invention provides a computer program product according to claim 12.

The present invention allows for a customization of electronic forms by pre-defining in a first screen view one or more line items. Each line item can be associated by a user with one or more first data elements. In one example, the first screen view includes an entry area into which the user can enter a descriptor for each line item, and the first data elements. After entry of the line item descriptors and first data elements, storage of the entered line item descriptors and first data elements in a first database can be effected. In particular, this data is stored in the first database in such a manner as to link every stored first data element to its respective line item descriptor.

A form to be filled out by a user in order to create an electronic document is displayed in a second screen view. In addition to the form, one or more control elements are displayed in the second screen view. Each control element represents a respective line item. Button text may be displayed in relation with each displayed button. In one example, the descriptor of the line item as stored in the first data base is displayed as button text in close relationship to the control element, e.g., next to the control element or in overlying relationship with the control element. Of course, an identifier other than the line item descriptor stored in the first database can be displayed in the second screen view in association with each respective control element, e.g., an identifier derived from the corresponding line item descriptor by abbreviating it. The control element is preferably displayed as a button. In a case where plural control elements that are associated with a corresponding plurality of line items are displayed in the second screen view, the buttons can be displayed in a linear arrangement, e.g., in a horizontal or vertical line.

Each control element displayed in the second screen view can be activated by a user using an input device. The input device can, for example, include a mouse device or a touch pad device that generates a pointer on a screen of a graphical output device.

The pointer is displaceable on the screen by moving a mouse of the mouse device or moving a finger on a touch pad of the touch pad device. The control element associated with a line item can be activated by placing the pointer over the control element and then clicking on a control key of the mouse device or touch pad device.

The user may have the option of filling in the form solely by typing text into blank spaces contained in the form using a keyboard or other input device. However, the user may wish to take advantage of the pre-defined one or more control elements appearing in the second screen view and add data to the form by activating one or more of the control elements. In the present invention, activation of a control element causes submission of a request to the first database to read the data element(s) stored in association with the corresponding line item. In response to this submission, data derived from the read data element(s) is delivered to the application handling the document creation process and added to the form. In this way, the form is filled in at least partly by simply activating a control element (button) in the second screen view. Of course, the user may have the option of activating one and the same control element more than once during the course of completing the form, for example, to add the same information to different portions of the form. He also may have the option to activate different control elements successively in order to fill different parts of the form with different information.

Using the control elements in the second screen view can greatly reduce the number of manual steps to be performed by a user in creating an electronic document. The first screen view allows to pre-define the control elements according to user needs. For example, frequently used data, i.e., data recurring in numerous documents, can be stored in the first database in association with one or more of the line items. This data then no longer needs to be entered into a form by typing every single piece of the data on a keyboard, but can conveniently be added to the form by simply hitting the corresponding control element(s) in the second screen view. The reduction of manual steps in the creation of electronic documents can afford an acceleration and also a simplification of work processes that rely on such documents. At the same time, it brings about a higher reliability as the reduced number of manual steps implies a reduced likelihood of errors, which inevitably occur with humans working. The present invention also allows to achieve higher productiveness and throughput in the generation of electronic documents.

The term "form" as used herein is to be understood in its most general meaning. It refers to any graphical structure displayed on a screen of a graphical output device and providing one or more entry fields (blank spaces) that are required to be filled with data by a user in order to create an electronic document. The form may be entirely text-oriented, but may also include pictorial elements. Typically, the additions to be made to the form will include pieces of text or numbers, but may also include any type of graphical symbols.

Preferably, the first screen view is displayed as a table view including a plurality of entry fields arranged in rows and columns for entering the first data elements.

At least some of the first data elements in the first database may represent information that can be added directly to the form. These data elements will be entered into the entry area of the first screen view as they are desired to appear in the form.

In one embodiment, the entry area of the first screen view may allow a user to enter, in association with each line item descriptor, at least one first data element serving as a cross-reference to information stored in a second database. In this case, it is not the cross-reference data element itself that is to be retrieved and added to the form, but the information hidden behind the cross-reference data element, i.e., the associated information in the second database. As an example, a form may require a user to add technical data on a particular product, say product "X", to complete the form. The technical data may be stored, e.g., in a product database along with information on various other products. Then, a line item descriptor "product X" can be defined in the first screen view, and the location from which the technical data on product X is to be obtained can be entered as an associated first data element for the line item descriptor "product X". The data element thus serves as a cross-reference referring to the product database as the source of the desired information. The term "adding data derived from a read first data element" is herein expressly intended to encompass both a direct retrieval of that first data element for display in the form and a retrieval of data referenced to by the first data element for display of the referenced data in the form.

According to the invention, a user can define through the use of an input device one or more master item descriptors and, for each master item descriptor, one or more line item descriptors and one or more first data elements in association with each respective line item descriptor. The line item descriptors are stored in the first database in relation to their respective master item descriptor, and the first data elements are stored in relation to their respective line item descriptor. In the second screen view, a control element is displayed for only those line item descriptors that are associated with a particular master item descriptor as selected by a user. Thus, depending on the selection made by the user regarding the master item descriptors, different second screen views may be generated that contain control elements for different sets of line item descriptors.

The master item descriptors are useful, e.g., when different types of documents are to be created that are associated with different forms and thus different second screen views. As an example, it may be desirable to pre-define a first set of line items for a first type of document and a second set of (different) line items for a second type of document. Then, a user can assign a first master item descriptor to the first type document and a second master item descriptor to the second type document. For each master item descriptor, the user can define, and have stored in the first database, the respective set of line items and associated first data elements. At a later stage, when a user wishes to create a document of the first type, he calls (selects) the corresponding first master item descriptor, resulting in a second screen view being displayed that contains control elements for all line item descriptors included in the first set. Similarly, if the user chooses to create a document of the second type, he selects the second master item descriptor and will obtain a second screen view with control elements for all line item descriptors contained in the second set.

An embodiment of the present invention provides for the generation of a third screen view on a graphical output device to enable a user to enter master item descriptors. The third screen view includes an entry area arranged to allow a user to enter a list of master item descriptors.

The third screen view can be displayed as a table view arranged to allow entry of the master item descriptors and one or more second data elements in relation to each master item descriptor. Each second data element is stored in the first database in relation to its associated master item descriptor.

In one example, the third screen view is arranged to allow a user to enter for each master item descriptor an active identifier as a second data element. The active identifier specifies whether the respective master item descriptor is in an active state. In the second screen view, a control element is displayed for each line item descriptor associated with a selected master item descriptor only if the active identifier associated with the selected master item descriptor indicates the active state for that master item descriptor. Thus, the active identifier can be used to selectively activate or deactivate individually for each master item the functionality provided by the present invention.

In another example, the third screen view is arranged to allow a user to enter for each master item descriptor a version identifier as a second data element. The version identifier specifies a version number of the respective master item descriptor. The version identifier enables a user to customize different versions of the same master item and make the various versions identifiable to the computer system. By employing an active identifier one of plural versions of a particular master item can be flagged as active, thus activating the functionality of the present invention for only the selected version.

### BRIEF DESCRIPTION OF THE DRAWINGS

Hereinafter, the present invention is described in more detail in connection with the accompanying drawings, in which:
Fig. 1 is a flowchart diagram illustrating steps performed in a customization process according to one example of the present invention;
Fig. 2 schematically illustrates an example of a master item preset screen view presented to a user during the customization process according to Fig. 1;
Fig. 3 schematically illustrates an example of a line item preset screen view presented to a user in the course of the customization process of Fig. 1;
Fig. 4 is a flowchart diagram illustrating steps performed in a document generation process according to one example of the present invention;
Fig. 5 schematically illustrates an example of a document generation screen view presented to a user in the course of the document generation process of Fig. 4; and
Fig. 6 is a schematic diagram of a data processing system that can be used to implement the present invention.

### DETAILED DESCRIPTION OF PREFERRED EXAMPLES

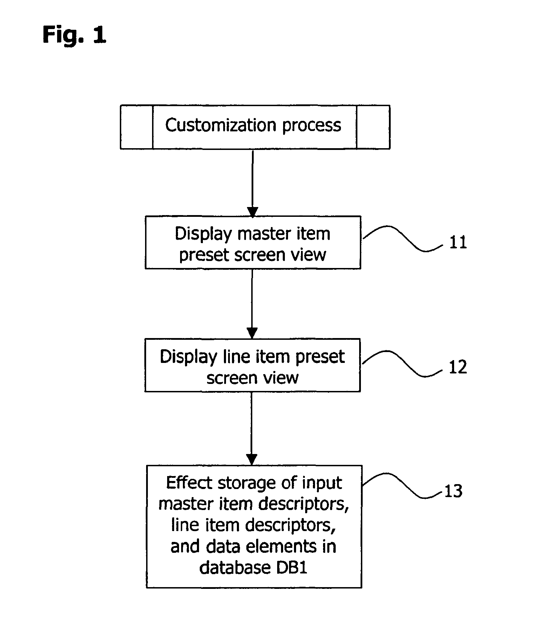

The exemplary customization process represented by the flowchart diagram of Fig. 1 allows a user to customize an electronic form for creating an electronic document to his own specific needs. In the customization process, a master item preset screen view (graphical user interface) is presented on a screen of a graphical output device of a computer in a step 11. The master item preset screen view is interactive in that it enables a user to enter a list of master item descriptors and, along with each master item descriptor, a version identifier and an active identifier. The master item descriptor may indicate a document type or a transaction type. The version identifier indicates a version number for each master item, and the active identifier indicates whether the particular master item is active or not. Additionally, the master item preset screen view may allow a user to enter other information in relation to each master item descriptor, such as an ID code internally used at the user's end for identifying each master item.

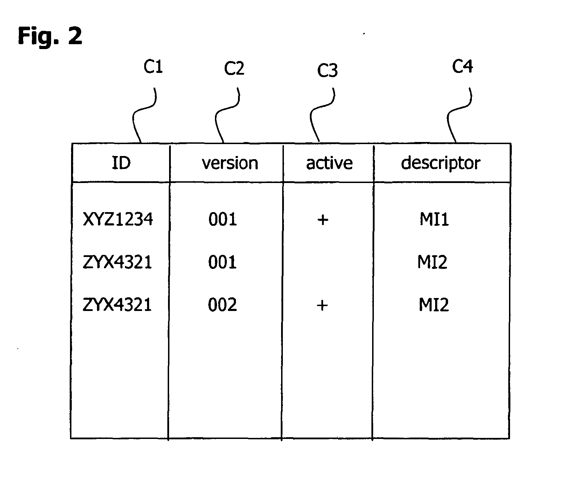

The exemplary master item preset screen view of Fig. 2 is set up as a table view containing a plurality of entry fields arranged in rows and columns. In a first column C1, the user may enter an ID code for each master item, in a second column C2 a version identifier, in a third column C3 an active identifier, and in a fourth column C4 a descriptor for each master item a user wishes to customize. As a purely illustrative and non-limiting example, master item descriptors MI1 and MI2 have been inserted in column C4 of the table view of Fig. 2, with MI2 being used twice. The master item designated MI1 is flagged as active through the use of a "+" at the corresponding position in column C3 and is given the version number "001". In column C1, "XYZ1234" has been entered as an ID code for the master item MI1.

Two versions have been defined for the master item MI2, one carrying the version number "001" and the other one carrying the version number "002". Version 002 of the master item MI2 is flagged as active, while version 001 of the same master item is indicated as being inactive through the lack of a "+" in column C3. Both versions of the master item MI2 are assigned the same ID code, i.e., "ZYX4321". A rule may apply that only one of plural versions of a master item may be flagged as active. The remaining versions are all inactive.

The customization process of Fig. 1 enables a user to relate a set of line items to each master item, with each line item representing a set of data. To this end, a line item preset screen view is presented on the screen of the graphical output device in a step 12. The line item preset screen view is such as to allow the user to input one or more line item descriptors and, for each input line item descriptor, one or more data elements.

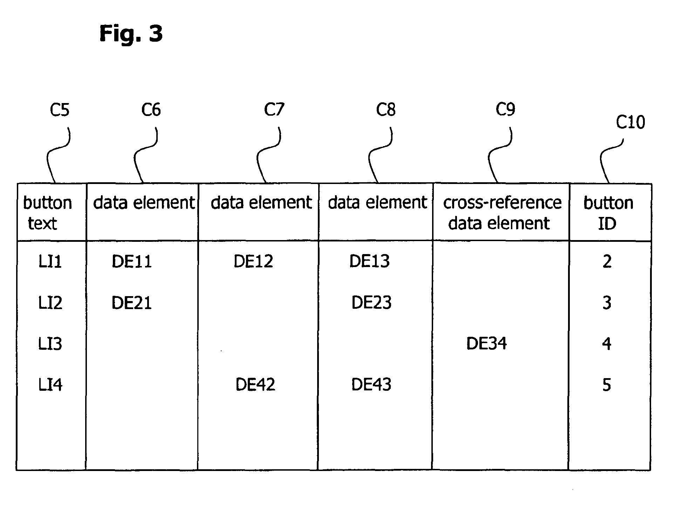

An exemplary line item preset screen view is depicted in Fig. 3. Much as the exemplary master item preset screen view of Fig. 2, the line item preset screen view illustrated in Fig. 3 is a table view containing a number of entry fields arranged in rows and columns. Each row of the table allows the user to input a descriptor for a line item and one or more data elements. All the line item descriptors the user wishes to assign to a particular master item are to be entered into a first column C5. The line item descriptors entered by the user in column C5 will later be used as button text in an electronic form for creating an electronic document. In subsequent columns C6, C7, C8, C9, the user may insert various data elements for each line item.

Columns C6 through C9 may be headlined in any convenient manner to explain the type of data element to be entered in the respective column. One of columns C6 through C9 may, for example, be used to enter a term or phrase that explains the corresponding line item in more detail. As an example, in a case where a user enters "HOTEL" as a line item in column C5 in one of the rows of the table of Fig. 3, he may enter "1^{st} category hotel" in one of the data element entry fields of columns C6-C9 in the same row. He then may enter a rate per night in another data element entry field of the same row and, possibly, additional information in yet another data element entry field of this row, such as a location or name of the hotel.

In a column C10, the may enter a button identification code (button ID) for each line item descriptor. The button ID is internally used by a computer program embodying the customization scheme of the present invention to unambiguously identify each button. In an alternate example, a button ID may be automatically generated, assigned to a line item, and displayed in the line item present screen view, by the program, e.g., upon the user activating a new row in this screen view or confirming entry of a line item descriptor. The user may be allowed to enter the same line item descriptor in two or more rows of the line item preset screen view as long as each line item is assigned a different button ID. It will be appreciated that the button ID itself may well serve the function of a line item descriptor so that column C5 may be optionally omitted. In such a case, different buttons may be distinguished, e.g., by different colors in the electronic form.

It goes without saying that the number of columns for entering data elements can vary depending on the particular application and the needs of the user. In one embodiment, the user may be enabled to define the number of data element columns himself. In another example, the number of data element columns may be fixed and not alterable by the user. In any case, the user may be free to fill data element entry fields in the line item preset screen view or leave them blank, as the specific needs of the user may require.

As a purely illustrative example, the line item preset screen view of Fig. 3 is shown to include line item descriptors LI1, LI2, LI3, and LI4 in column C5, with each of these descriptors representing a different line item. DE11, DE12, and DE13 have been input as data elements for line item LI1, data elements DE21 and DE23 for line item LI2, a single data element DE34 for line item LI3, and data elements DE42 and DE43 for line item LI4. The line item descriptors LI1, LI2, LI3, LI4 are assigned button ID's 2, 3, 4 and 5, respectively.

The master items can, e.g., refer to business transactions or processes, which each involve a specific type of electronic document to be created using a specific type of electronic form. The business transactions can be procurement-related transactions, accounting-related transactions, transactions related to human resource management, logistics-related transactions, and so forth. An invoice, a bid invitation, a purchase order, a confirmation of an order, an acknowledgement of receipt of ordered goods, and an expense report are but examples of electronic documents that are commonly generated in the course of a business process and may require different kinds of electronic forms for their creation. Then, "invoice", "purchase order", "expense report", etc. may be entered by a user as master item descriptors in the master item preset screen view. Alternatively, a master item can be representative of a non-business transaction, project, process, or device, such as in the scientific or R&D (research and development) domain or in the design area.

In a step 13, the customization process of Fig. 1 provides for the storage of the information entered into the master item and line item preset screen views in a first database hereinafter referred to as DB1. Specifically, the line item descriptors are stored in the database DB1 in relation to their associated master item descriptor, and the data elements are stored in the database DB1 in relation to their associated line item descriptor. In this way, the various data is stored in the database DB1 in a relational manner. Storage of the data may be effected, for example, by a user pressing a specific key on a keyboard or hitting a specific item in a menu (such as a scroll-down menu) displayed on the screen of the graphical output device.

To establish a relation between a master item in the master item preset screen view and a set of line items during the preset phase of steps 11 and 12 of Fig. 1, conventional means can be employed as they are readily available to one skilled in the art. For example, if a user wishes to enter a set of line items for a master item he has input into the master item preset screen view, he may activate the corresponding row or entry field in the table of Fig. 2 through clicking (single or double) on that row or entry field using a pointer device (e.g., mouse, trackball, touch pad). Activating a row or entry field in the master item preset screen view in such manner may have the effect that all data inserted into the line item preset screen view is linked automatically to the master item corresponding to the activated row or entry field. If no line item information has yet been input for a particular master item, activating the corresponding row or entry field in the master item preset screen view may cause the line item preset screen view to be displayed all blank. If line item information has previously been input and stored for a particular master item, activating this master item through clicking on the corresponding row or entry field in the master item preset screen view may produce the line item preset screen view including all the previously input data. In this way, each master item can be linked to its own unique line item information.

In one example, the master item preset screen view and the line item preset screen view are displayed simultaneously on the graphical output device, e.g., side by side or one above the other. In another example, only one of the master item preset screen view and the line item preset screen view is displayed on the graphical output device at a time, with suitable means being provided to allow the user to switch between the two screen views.

It is to be understood that a user, once a set of line items and associated data elements have been defined and stored for one or more respective master items, can change the content of the database DB1 at any time later using the master item preset screen view and the line item preset screen view so as to, e.g., remove, rename or add master items or do the same with the line items and/or data elements.

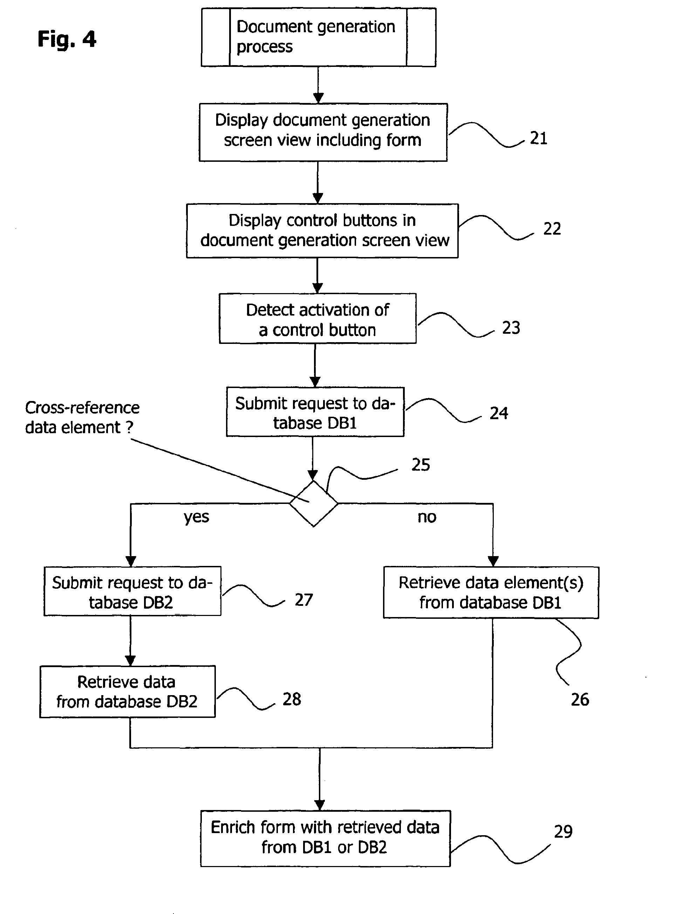

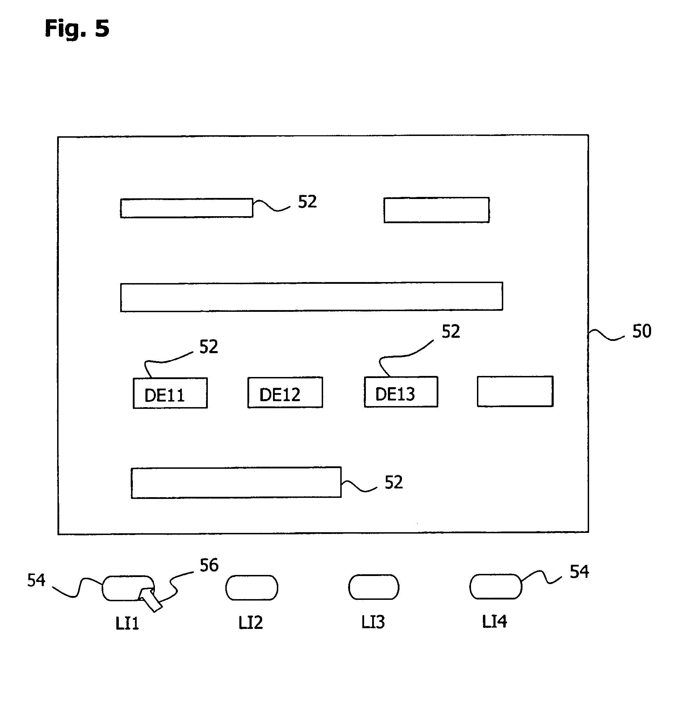

Reference is now made to Figs. 4 and 5. In an application phase separate from the predefinition phase explained above, a user may wish to create an electronic document using line items predefined as above. To this end, a software program application for creating the document is executed. The application causes an electronic form to be presented on a screen of a graphical output device of a computer (step 21 in the flowchart diagram of Fig. 4). The form is associated with a previously defined master item. For each line item that has been defined for that master item, a control element is displayed on the screen. The control elements can be displayed inside or outside the form.

Fig. 5 depicts an exemplary document generation screen view that may be presented in step 21 to a user. The screen view includes a form 50, which contains a plurality of entry fields 52. Moreover, the screen view includes several control buttons 54, which are generated in a step 22 in Fig. 4. In the screen view of Fig. 5, the control buttons 54 are horizontally aligned at the bottom of the form. Of course, any other convenient arrangement and position of the control buttons may be used. Each control button 54 is associated with a line item corresponding to the particular master item. A button text is associated with each control button 54. The button text corresponds to that which has been entered as a line item descriptor for the respective line item in the line item preset screen view. In the illustrated example of Fig. 5, four control buttons 54 are displayed that are designated "LI1", "LI2", "LI3", and "LI4". Although the button text is shown in Fig. 5 as being displayed below the corresponding control button 54, it can be displayed at any other position near the corresponding button 54 or in overlying relationship therewith.

If information on more than one master item is stored in the database DB1, a selection has to be made by the user as to a particular master item, and optionally as to a particular version of the selected master item, for which control buttons 54 are to be displayed in the document generation screen view. The software application may include suitable means that allow the user to select from a list of some or all of the predefined master items. Also, different master items may be associated with different types of electronic form, with each type of form associated with a different software application. By selecting a particular software application, a user thus may automatically and inherently select a particular master item and thereby cause the appropriate set of line item descriptors and control buttons to appear in the document generation screen view.

Moreover, control buttons 54 are displayed only where the corresponding master item has been flagged as active in the master item preset screen view. If a master item is flagged as inactive, an electronic form may be generated for such master item in the document generation screen view with no control buttons 54 displayed. Alternatively, provision may be made to prevent an electronic form from being generated for master items flagged as inactive.

If a user has selected an active master item, information regarding the associated line items is read from the database DB1 and a control button 54 for each line item is generated in the document generation screen view containing the form to be filled out. The control buttons 54 are arranged to be activated by a user using a mouse device or other input device. For example, the control buttons 54 can be activated by hitting with a pointer 56 generated by a mouse device of other pointing device.

Once it is detected that a button 54 has been activated by a user (step 23 in Fig. 4), the data underlying the corresponding line item is identified. To this end, an electronic request is sent to the database DB1 to read all the data elements that have been stored in connection with the particular line item (step 24 in Fig. 4). As an example, if the user hits the button 54 named "LI1" in Fig. 5, the request to identify what data elements are associated with the line item LI1 results in the data elements DE11, DE12, and DE13 being retrieved. On the other hand, if the user hits the button ton designated "LI3", the data element DE34 is read, which is the only data element that has been predefined for the line item LI3.

Some or all of the data elements stored in the database DB1 may be destined for direct retrieval. Direct retrieval means that the data elements are suited for being added to the form as they are. In the line item preset screen view of Fig. 3, some or all of the columns C9-C9 may be reserved for direct retrieval data elements.

In one example, the line item preset screen view may be such as to allow a user to enter a cross-reference as a data element in one of the entry fields of this screen view. For example, one of the columns C6-C9 in the table view of Fig. 3 may be predetermined to receive such cross-reference data elements. In Fig. 3, the column C9 is indicated as being reserved for cross-reference data elements. Of course, this is merely an example and other columns (one or more) may be provided for entering cross-reference data elements. A cross-reference data element constitutes data that is a cross-reference to other data maintained in a further data repository. In the following, the further data repository is referred to as database DB2. A cross-reference data element is not destined, nor suited, for being added to the form. It is the data to which the cross-reference data element refers that is to be used to enrich the form.

In a step 25 in the routine of Fig. 4, it is determined whether a data element identified in response to a user hitting a control button 54 is a cross-reference data element or a direct retrieval data element. If it is determined that the data element is a direct retrieval data element, this data element is retrieved and transferred to the document generation screen view (step 26 in the flowchart diagram of Fig. 4). If it is determined that the data element is a cross-reference data element, an electronic request is created and transmitted to the database DB2 to read the information referenced by the identified cross-reference data element (step 27 in Fig. 4). At the database DB2, the request is processed and the corresponding data retrieved (step 28 in Fig. 4). The retrieved data is then transferred to the document generation screen view.

The data transferred to the document generation screen view, no matter its source, i.e., from the database DB1 or the database DB2, is used to enrich the form by filling the data into one or more entry fields of the form (step 29 of the routine of Fig. 4). This is illustrated schematically in Fig. 5 by means of the data elements DE11, DE12, and DE13 that have been inserted into corresponding entry fields 52 of the form 50, assuming that the user has hit the control button designated "LI1". In this way, by simply displaying in the document generation screen view one or more predefined (customized) control buttons that can be selectively activated by a user, the process of filling out the form 50 can be simplified and accelerated, liberating the user of the requirement to fill out the entire form through typing text in each of the form's entry fields.

There may be a predetermined correlation between the various data element columns C6-C9 in the line item preset screen view and the entry fields 52 of the form 50. Specifically, each of the data element columns C6-C9 may be uniquely assigned to a respective entry field 52 of the form 50. Then, all data elements input in the same column will be added to the same entry field 52, no matter which of the control buttons 54 is hit.

In the following, a computer architecture is described that can be used to implement the present invention.

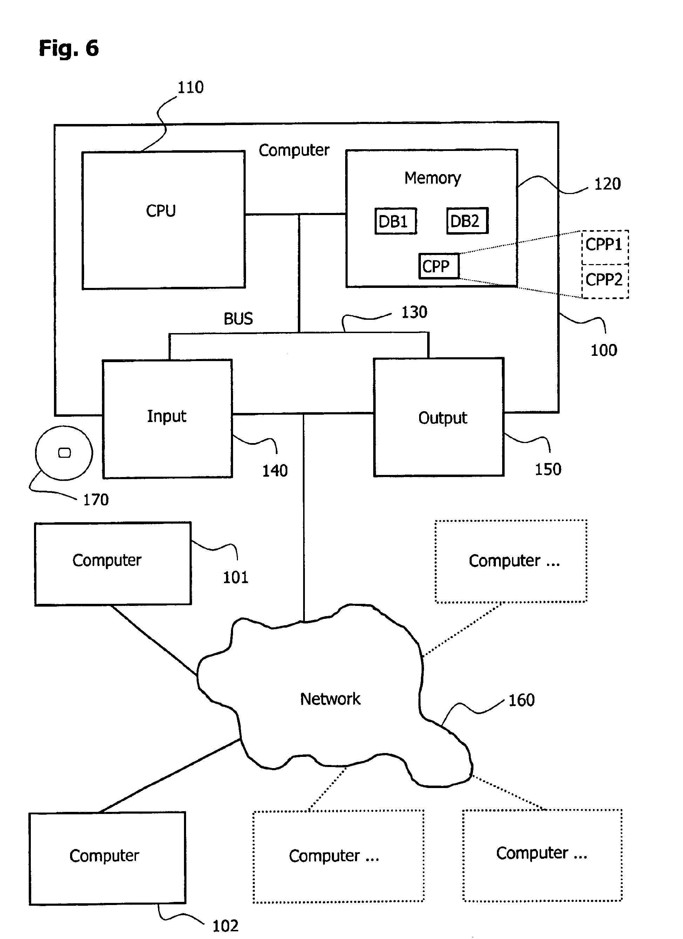

In Fig. 6, a simplified block diagram of a computer system is illustrated. The computer system includes a computer 100. The computer 100 comprises a processor 110, a memory 120, a bus 130, one or more input devices 140 and one or more output devices 150, all interoperating in a conventionally known manner. The input and output devices (I/O devices) act as a user interface. The methodology of the present invention can be embodied in a computer program product (hereinafter referred to as CPP). The CPP constitutes program code that is adapted to generate program signals collectively called a "program". The program code controls the operation of the computer 100 and its interaction with other components of the computer system.

The computer 100 can, for example, be a conventional personal computer (PC), a desktop, notebook or hand-held device, a multiprocessor computer, a microprocessor-based or programmable consumer electronics device, a minicomputer, a mainframe computer, a personal mobile computing device, a mobile telephone, a portable or stationary personal computer, a palmtop computer, or the like. The processor 110 can, for example, be a central processing unit (CPU), a micro-controller unit (MCU), a digital signal processor (DSP), or the like.

The computer system, in addition to the computer 100, may comprise further computers 101, 102 ... linked to the computer 100 and to each other via a network 160. The computers 100, 101, 102 ... may be realized, for example, as clients, servers, routers, peer devices or any other common network devices. The computers 101, 102 ... may comprise some or all of the elements described with respect to the computer 100. Hence, the elements 110 to 150 of the computer 100 may collectively illustrate corresponding elements in the other computers 101, 102 ... of the system.

The memory 120 symbolizes suitable structure capable of storing data and instructions temporarily and/or permanently. Although the memory 120 is illustrated in Fig. 6 as being part of the computer 100, the functionality of the memory 120 may be implemented partially or entirely in other components of the computer system, such as in one or more of the other computers 101, 102 ... and/or within the network 160. Moreover, the memory 120 may be a functional and/or constructional unit separate from the processor 110, but may also be realized as part of the processor 110 itself (e.g., cache, register).

The memory 120 may include a read only memory (ROM) portion and/or a random access memory (RAM) portion. Other access options and capabilities of the memory 120 are likewise conceivable. The memory 120 may be physically implemented as a machine-accessible information storage medium, such as a magnetic medium (e.g., hard disk, floppy disk, zip disk, tape), an optical medium (e.g., optical disk like CD-ROM or DVD), a semiconductor medium (as, e.g., DRAM, SRAM, EPROM, EEPROM, memory stick), or any other medium. The memory 120 may be concentrated in one location or on one storage medium or may be distributed across different locations and/or media. One or more portions of the memory 120 may be removable from respective components of the computer system, other memory portions may be fixed with respect to such components. The computer 100 may use means well known in the art for reading from and writing to an information storage medium, such as a disk drive, a tape drive, a reader/writer for memory cards or memory sticks, etc.

The or each input device 140 is a device that provides data and instructions for processing by the computer 100. For example, the one or more input devices 140 will typically include a pointing device (e.g., a mouse, a trackball, a touch pad) and/or a keyboard. While these are examples of devices requiring human interaction, one or more input devices 140 may alternatively operate without human interaction, such as a wireless receiver.

The or each output device 150 is a device that presents instructions and data that have been processed. The one or more output devices 150 of the computer 100 include a graphical output device having a screen for displaying graphical images. The graphical output device can, e.g., be a CRT (cathode ray tube) monitor, a flat panel display, or a liquid crystal display. Additionally, there may be provided a printer or plotter as a further output device 150. One or more input devices 140 and one or more output devices 150 can be combined in a single device. The input/output devices 140 and 150 are coupled to the computer 100 via the bus 130 (as illustrated) or via the network 160 (optional).

The computer system may encompass the Internet and/or an intranet. The network 160 may include a wired or a wireless network, such as, for example, a local area network (LAN), a wide area network (WAN), a wireless LAN (WLAN), a public switched telephone network (PSTN), an integrated services digital network (ISDN), an infra-red (IR) or Bluetooth link, a UMTS (universal mobile telecommunications system) link, a GSM (global system for mobile communication) link, or a CDMA (code division multiple access) link.

Transmission protocols, mechanisms and data formats to effect communications between components of the computer system are widely known. TCP/IP (transmission control protocol/internet protocol), HTTP (hyper text transfer protocol), SHTTP (secure HTTP), WAP (wireless application protocol), URL (unique resource locator), URI (unique resource identifier), HTML (hyper text markup language), XML (extensible markup language), XHTML (extensible hyper text markup language), WML (wireless application markup language), EDI (electronic data interchange), which provides for an electronic exchange of business information between or inside organizations and their IT infrastructure in a structured format, RFC (remote function call), and API (application programming interface) are mere examples of such protocols, mechanisms and data formats.

Interfaces for coupling components of the computer system are widely known in the art as well. For sake of simplicity, such interfaces are not illustrated. An interface may, for example, be configured as a serial port interface, a parallel port interface, a game port, a universal serial bus (USB) interface, an internal or external modem, a video adapter, a sound card, etc.

The CPP may reside anywhere in the computer system and/or be provided on a separate program carrier medium 170. All of the CPP may reside in the same component of the computer system, such as the computer 100. Alternatively, different portions of the CPP may be distributed across different components of the computer system. For example, it is conceivable for a first portion of the CPP to reside on the computer 100 and for another portion of the CPP to reside on another computer of the computer system.

The program carrier medium 170 can be implemented as any type of computer-readable medium, such as a magnetic or optical disk or a magnetic tape. To communicate the CPP to the computer 100, the program carrier medium 170 is inserted into an input device 140 of the computer 100 that is adapted to retrieve the program code of the CPP from the program carrier medium 170. The program code provided by the CPP can be executed solely by the computer station 100, in which case the network 160 and the other computers 101, 102 ... can be omitted. Alternatively, it can be executed in a distributed manner using distributed computing facilities in the computer system.

In the memory 120, software program support modules, such as a basic input output system (BIOS), an operating system (OS), a program library, a compiler, an interpreter, communication programs, drivers, protocol converters, application software programs like text processors, (Internet-) browsers, and data base applications may be stored. One skilled in the art will be readily able to use the CPP in connection with any of these support modules.

The CPP is configured to effect generation and display of the various screen views described above. Specifically, the CPP operates to carry out the various steps illustrated in and described with respect to Figs. 1 and 4. The CPP may be comprised of two or more program code portions, which may or may not reside at the same location in the computer system. For example, the CPP may comprise a first program code portion that is effective to control and carry out the customization process for predefining control buttons, while a second program code portion of the CPP may be effective to control and carry out the document generation process. For sake of illustration, two such program code portions CPP1 and CPP2 are schematically depicted in Fig. 6 as being part of the CPP, with CPP1 controlling the customization process and CPP2 controlling the document generation process. In one example, both CPP1 and CPP2 reside on the computer 100. In another example, CPP1 and CPP2 reside on different computers of the computer system. For example, while CPP2, which is the program code portion controlling the user application proper, may reside on the computer 100, CPP1 may reside elsewhere in the computer system.

As for the databases DB1 and DB2, these may be located anywhere in the computer system. In Fig. 6 they are illustrated as being implemented in the memory 120 of the computer 100. However, at least one of the databases DB1 and DB2 may be located external to the computer 100, for example in one of the computers 101, 102 .... Also, at least one of the databases DB1, DB2 may be a shared database to which more than one component of the computer system have access. Alternatively, one or both of the databases DB1, DB2 may be uniquely dedicated to one of the computers of the computer system.

Although various embodiments of the present invention are described and illustrated herein, it is to be understood that the invention is not limited to the embodiments disclosed. Various modifications and variations may be made without departing from the scope of the invention as defined in the appended claims.

## Claims

1. A computer-implemented system for creating an electronic document, said document being generated based on data added to an electronic form (50) by a user through interaction with a computer, said system being programmed to perform the steps of:
(a) displaying a first screen view on a graphical output device (150), said first screen view including an entry area arranged to allow a user to enter through an input device (140) one or more master item descriptors and, in association with each master item descriptor, one or more line item descriptors, and one or more first data elements in association with each of one or more line item descriptors;
sending off every entered first data element for storage in a first database in relation to its associated line item descriptor and its associated master item descriptor;
(b) displaying a second screen view on a graphical output device, said second screen view including said form (50) and being arranged to allow a user to add data to said form (50) upon calling a particular master item descriptor of the one or more master item descriptors by the user;
displaying in said second screen view one or more control buttons (54), each identified by a button identifier associated with a respective line item descriptor and with the particular master item descriptor stored in said first database, each control button (54) being configured to be activated through user operation of an input device (140);
upon activation of a control button (54) by a user, submitting said button identifier as a request to said first database to read said one or more first data elements associated with said line item descriptor corresponding to said button identifier of said activated control button (54); and
adding data derived from said read one or more first data elements to said form (50).

2. The system of claim 1, programmed to display plural control buttons (54) as a line of buttons.

3. The system of claim 1 or 2, programmed to display button text in proximity to, or in overlying relationship with, each displayed button.

4. The system of one of the preceding claims, programmed to display said first screen view as a table view including a plurality of entry fields arranged in rows and columns for entering said first data elements.

5. The system of one of the preceding claims, programmed to perform, upon activation of a control button, the step of effecting direct retrieval of one or more first data elements associated with the line item descriptor corresponding to the button identifier of said activated control button from said first database and adding said retrieved one or more first data elements to said form (50).

6. The system of one of the preceding claims, wherein said entry area of said first screen view includes at least one cross-reference entry field for each line item descriptor, said cross-reference entry field allowing entry, by a user, of a first data element as a cross-reference data element referring to information stored in a second database; and wherein said system is programmed to submit, upon reading of a cross-reference data element in said first database, a request to said second database to retrieve said information referenced by said cross-reference data element and add said retrieved information from said second database to said form (50).

7. The system of claim 6, programmed to display a third screen view on a graphical output device (150), said third screen view including an entry area arranged to allow a user to enter a list of master item descriptors.

8. The system of claim 7, programmed to display said third screen view as a table view arranged to allow entry of said master item descriptors and one or more second data elements in relation to each master item descriptor; wherein said system is further programmed to effect storage, in said first database, of each second data element in relation to its associated master item descriptor.

9. The system of claim 8, wherein said third screen view is arranged to allow a user to enter for each master item descriptor an active identifier as a second data element, said active identifier specifying whether the respective master item descriptor is in an active state; and wherein said system is further programmed to effect, in response to a user selecting a particular master item descriptor, display of a control button (54) for each line item descriptor associated with the selected master item descriptor in said second screen view only if said active identifier associated with the selected master item descriptor indicates said active state for that master item descriptor.

10. The system of claim 9, wherein said third screen view is arranged to allow a user to enter for each master item descriptor a version identifier as a second data element, said version identifier specifying a version number of the respective master item descriptor.

11. A computer-implemented method for creating an electronic document, said document being generated based on data added to an electronic form by a user through interaction with a computer, said method including the steps of:
(a) displaying (11) a first screen view on a graphical output device, said first screen view including an entry area arranged to allow a user to enter through an input device one or more master item descriptors and, in association with each master item descriptor, one or more line item descriptors, and one or more first data elements in association with each of one or more line item descriptors;
sending off (13) every entered first data element for storage in a first database in relation to its associated line item descriptor and its associated master item descriptor;
(b) displaying (21) a second screen view on a graphical output device, said second screen view including said form and being arranged to allow a user to add data to said form upon calling a particular master item descriptor of the one or more master item descriptors by the user;
displaying (22) in said second screen view one or more control buttons, each identified by a button identifier associated with a respective line item descriptor and with the particular master item descriptor stored in said first database, each control button being configured to be activated through user operation of an input device;
upon activation of a control button by a user, submitting (24) said button identifier as a request to said first database to read said one or more first data elements associated with said line item descriptor corresponding to said button identifier of said activated control button; and
adding (29) data derived from said read one or more first data elements to said form.

12. A computer program product for creating an electronic document, said document being generated based on data added to an electronic form by a user through interaction with a computer, said computer program product comprising:
a first program code portion arranged to effect
(a) display of a first screen view on a graphical output device, said first screen view including an entry area arranged to allow a user to enter through an input device one or more master item descriptors and, in association with each master item descriptor, one or more line item descriptors, and one or more first data elements in association with each of one or more line item descriptors;
sending-off of every entered first data element for storage in a first database in relation to its associated line item descriptor and its associated master item descriptor; and
a second program code portion arranged to effect
(b) display of a second screen view on a graphical output device, said second screen view including said form and being arranged to allow a user to add data to said form upon calling a particular master item descriptor of the one or more master item descriptors by the user;
display of one or more control buttons in said second screen view, each control button being identified by a button identifier associated with a respective line item descriptor and with the particular master item descriptor stored in said first database, each control button being configured to be activated through user operation of an input device;
upon activation of a control button by a user, submission of said button identifier as a request to said first database to read said one or more first data elements associated with said line item descriptor corresponding to said button identifier of said activated control button; and
addition of data derived from said read one or more first data elements to said form.

13. The computer program product of claim 12 stored on a computer-readable information carrier medium (170).

## Patentansprüche

1. Ein computerimplementiertes System zur Erzeugung eines elektronischen Dokuments, wobei das genannte Dokument aufgrund von Daten erzeugt wird, die einem elektronischen Formular (50) durch einen Benutzer durch Interaktion mit einem Computer hinzugefügt werden, wobei das genannte System programmiert wird, um die folgenden Schritte auszuführen:
(a) anzeigen einer ersten Bildschirmansicht auf einer grafischen Ausgabevorrichtung (150), wobei die genannte erste Bildschirmansicht einen Eingabebereich beinhaltet, der eingerichtet ist, um einem Benutzer zu ermöglichen, über eine Eingabevorrichtung (140) einen oder mehrere Master-Datenelement-Deskriptoren einzugeben und, in Verbindung mit jedem Master-Datenelement-Deskriptor, einen oder mehrere Einzel-Datenelement-Deskriptoren, und ein oder mehrere erste Datenelemente in Verbindung mit jedem einzelnen oder mehreren Einzel-Datenelement-Deskriptoren;
abschicken von jedem eingegebenen ersten Datenelement zur Speicherung in einer ersten Datenbank in Verbindung mit seinem assoziierten Einzel-Datenelement-Deskriptor und seinem assoziierten Master-Datenelement-Deskriptor;
(b) anzeigen einer zweiten Bildschirmansicht auf einer grafischen Ausgabevorrichtung, wobei die genannte zweite Bildschirmansicht das genannte Formular (50) beinhaltet und eingerichtet ist, um einem Benutzer zu ermöglichen, dem genannten Formular (50) Daten hinzuzufügen, nachdem *(upon)* ein bestimmter Master-Datenelement-Deskriptor aus dem oder den Master-Datenelement-Deskriptoren durch den Benutzer aufgerufen worden ist;
anzeigen in der genannten zweiten Bildschirmansicht von einer oder mehreren Schaltflächen (54), die jeweils durch einen Schaltflächen-Identifikator identifiziert werden, der mit einem entsprechenden Einzel-Datenelement-Deskriptor und mit dem bestimmten Master-Datenelement-Deskriptor assoziiert ist, der in der genannten ersten Datenbank gespeichert ist, wobei jede Schaltfläche (54) konfiguriert ist, um durch eine Benutzerbedienung einer Eingabevorrichtung (140) aktiviert zu werden;
bei bzw. nach *(upon)* der Aktivierung einer Schaltfläche (54) durch einen Benutzer, vorlegen des genannten Schaltflächen-Identifikators als Anfrage an die genannte erste Datenbank, um das genannte oder die genannten ersten Datenelemente zu lesen, die mit dem genannten Einzel-Datenelement-Deskriptor verknüpft sind, der dem genannten Schaltflächen-Identifikator der genannten aktivierten Schaltfläche (54) entspricht; und
hinzufügen von Daten, die vom genannten Lesen des oder der ersten Datenelemente abgeleitet werden, zum genannten Formular (50).

2. Das System nach Anspruch 1, das programmiert ist, um vielzählige Schaltflächen (54) als Schaltflächen-Linie anzuzeigen.

3. Das System nach Anspruch 1 oder 2, das programmiert ist, um einen Schaltflächentext in unmittelbarer Nähe von jeder oder in überlagernder Bindung an jede angezeigte Schaltfläche anzuzeigen.

4. Das System nach einem der vorhergehenden Ansprüche, das programmiert ist, um die genannte erste Bildschirmansicht als Tabellenansicht anzuzeigen, die eine Vielzahl an Eingabefeldern beinhaltet, die zur Eingabe der genannten ersten Datenelemente in Reihen und Spalten angeordnet sind.

5. Das System nach einem der vorhergehenden Ansprüche, das programmiert ist, um bei der Aktivierung einer Schaltfläche den Schritt durchzuführen, der darin besteht, aus der genannten ersten Datenbank einen direkten Abruf von einem oder mehreren ersten Datenelementen zu bewerkstelligen, die dem Einzel-Datenelement-Deskriptor zugeordnet sind, der dem Schaltflächen-Identifikator der genannten aktivierten Schaltfläche entspricht, und das oder die genannten abgerufenen ersten Datenelemente dem genannten Formular (50) hinzuzufügen.

6. Das System nach einem der vorhergehenden Ansprüche, wobei der genannte Eingabebereich der genannten ersten Bildschirmansicht mindestens ein Querverweis-Eingabefeld für jeden Einzel-Datenelement-Deskriptor beinhaltet, wobei das genannte Querverweis-Eingabefeld durch einen Benutzer die Eingabe eines ersten Datenelements als Querverweis-Datenelement ermöglicht, das auf Information verweist, die in einer zweiten Datenbank gespeichert ist; und wobei das genannte System dazu programmiert ist, beim Lesen eines Querverweis-Datenelements in der genannten ersten Datenbank, eine Anfrage an die genannte zweite Datenbank zu übermitteln, um die genannte Information abzurufen, auf die ausgehend vom genannten Querverweis-Datenelement verwiesen wird, und die abgerufene Information von der genannten zweiten Datenbank dem genannten Formular (50) hinzuzufügen.

7. Das System nach Anspruch 6, das programmiert ist, um eine dritte Bildschirmansicht auf einer grafischen Ausgabevorrichtung (150) anzuzeigen, wobei die genannte dritte Bildschirmansicht einen Eingabebereich beinhaltet, um einem Benutzer zu ermöglichen, eine Liste von Master-Datenelement-Deskriptoren einzugeben.

8. Das System nach Anspruch 7, das programmiert ist, um die genannte dritte Bildschirmansicht als Tabellenansicht anzuzeigen, die zur Eingabe der genannten Master-Datenelement-Deskriptoren und eines oder mehrerer zweiter Datenelemente eingerichtet ist, im Verhältnis zu jedem Master-Datenelement-Deskriptor; wobei das genannte System des Weiteren programmiert ist, um, in der genannten ersten Datenbank, eine Speicherung eines jeden zweiten Datenelements im Verhältnis zu seinem assoziierten Master-Datenelement-Deskriptor zu bewirken.

9. Das System nach Anspruch 8, wobei die genannte dritte Bildschirmansicht eingerichtet ist, um einem Benutzer zu ermöglichen, für jeden Master-Datenelement-Deskriptor einen aktiven Identifikator als zweites Datenelement einzugeben, wobei der genannte aktive Identifikator spezifiziert, ob sich der entsprechende Master-Datenelement-Deskriptor in einem aktiven Zustand befindet; und wobei das genannte System des Weiteren programmiert ist, als Antwort auf einen Benutzer, der einen bestimmten Master-Datenelement-Deskriptor auswählt, die Anzeige einer Schaltfläche (54) für jeden Einzel-Datenelement-Deskriptor, der dem ausgewählten Master-Datenelement-Deskriptor zugeordnet ist, in der genannten zweiten Bildschirmansicht zu bewirken, nur falls der genannte aktive Identifikator, der dem ausgewählten Master-Datenelement-Deskriptor zugeordnet ist, den genannten aktiven Zustand für diesen Master-Datenelement-Deskriptor erkennen lässt.

10. Das System nach Anspruch 9, wobei die genannte dritte Bildschirmansicht eingerichtet ist, um einem Benutzer zu ermöglichen, für jeden Master-Datenelement-Deskriptor einen Versions-Identifikator als zweites Datenelement einzugeben, wobei der genannte Versions-Identifikator eine Versionsnummer des jeweiligen Master-Datenelement-Deskriptors spezifiziert.

11. Ein computerimplementiertes Verfahren zur Erzeugung eines elektronischen Dokuments, wobei das genannte Dokument aufgrund von Daten generiert wird, die einem elektronischen Formular durch einen Benutzer durch Interaktion mit einem Computer hinzugefügt werden, wobei das Verfahren die folgenden Schritte beinhaltet:
(a) anzeigen (11) einer ersten Bildschirmansicht auf einer grafischen Ausgabevorrichtung, wobei die genannte erste Bildschirmansicht einen Eingabebereich beinhaltet, der eingerichtet ist, um einem Benutzer zu ermöglichen, über eine Eingabevorrichtung einen oder mehrere Master-Datenelement-Deskriptoren einzugeben und, in Verbindung mit jedem Master-Datenelement-Deskriptor, einen oder mehrere Einzel-Datenelement-Deskriptoren, und ein oder mehrere erste Datenelemente in Verbindung mit jedem einzelnen oder mehreren Einzel-Datenelement-Deskriptoren;
abschicken (13) von jedem eingegebenen ersten Datenelement zur Speicherung in einer ersten Datenbank in Verbindung mit seinem assoziierten Einzel-Datenelement-Deskriptor und seinem assoziierten Master-Datenelement-Deskriptor;
(b) anzeigen (21) einer zweiten Bildschirmansicht auf einer grafischen Ausgabevorrichtung, wobei die genannte zweite Bildschirmansicht das genannte Formular beinhaltet und eingerichtet ist, um einem Benutzer zu ermöglichen, dem genannten Formular Daten hinzuzufügen, nachdem (*upon*) ein bestimmter Master-Datenelement-Deskriptor aus dem oder den Master-Datenelement-Deskriptoren durch den Benutzer aufgerufen worden ist;
anzeigen (22) in der genannten zweiten Bildschirmansicht von einer oder mehreren Schaltflächen, die jeweils durch einen Schaltflächen-Identifikator identifiziert werden, der mit einem entsprechenden Einzel-Datenelement-Deskriptor und mit dem bestimmten Master-Datenelement-Deskriptor assoziiert ist, der in der genannten ersten Datenbank gespeichert ist, wobei jede Schaltfläche konfiguriert ist, um durch eine Benutzerbedienung einer Eingabevorrichtung aktiviert zu werden;
bei bzw. nach (*upon*) der Aktivierung einer Schaltfläche durch einen Benutzer, vorlegen (24) des genannten Schaltflächen-Identifikators als Anfrage an die genannte erste Datenbank, um das genannte oder die genannten ersten Datenelemente zu lesen, die mit dem genannten Einzel-Datenelement-Deskriptor verknüpft sind, der dem genannten Schaltflächen-Identifikator der genannten aktivierten Schaltfläche entspricht; und
hinzufügen (29) von Daten, die vom genannten Lesen des oder der ersten Datenelemente abgeleitet werden, zum genannten Formular.

12. Ein Computerprogrammprodukt zur Erzeugung eines elektronischen Dokuments, wobei das genannte Dokument aufgrund von Daten erzeugt wird, die einem elektronischen Formular durch einen Benutzer durch Interaktion mit einem Computer hinzugefügt werden, wobei das genannte Computerprogrammprodukt Folgendes umfasst:
einen ersten Programmcode-Abschnitt, der eingerichtet ist, um Folgendes zu bewirken:
(a) anzeigen einer ersten Bildschirmansicht auf einer grafischen Ausgabevorrichtung, wobei die genannte erste Bildschirmansicht einen Eingabebereich beinhaltet, der eingerichtet ist, um einem Benutzer zu ermöglichen, über eine Eingabevorrichtung einen oder mehrere Master-Datenelement-Deskriptoren einzugeben und, in Verbindung mit jedem Master-Datenelement-Deskriptor, einen oder mehrere Einzel-Datenelement-Deskriptoren, und ein oder mehrere erste Datenelemente in Verbindung mit jedem einzelnen oder mehreren Einzel-Datenelement-Deskriptoren;
abschicken von jedem eingegebenen ersten Datenelement zur Speicherung in einer ersten Datenbank in Verbindung mit seinem assoziierten Einzel-Datenelement-Deskriptor und seinem assoziierten Master-Datenelement-Deskriptor; und
einen zweiten Programmcode-Abschnitt, der eingerichtet ist, um Folgendes zu bewirken:
(b) anzeigen einer zweiten Bildschirmansicht auf einer grafischen Ausgabevorrichtung, wobei die genannte zweite Bildschirmansicht das genannte Formular beinhaltet und eingerichtet ist, um einem Benutzer zu ermöglichen, dem genannten Formular Daten hinzuzufügen, nachdem (*upon*) ein bestimmter Master-Datenelement-Deskriptor aus dem oder den Master-Datenelement-Deskriptoren durch den Benutzer aufgerufen worden ist;
anzeigen in der genannten zweiten Bildschirmansicht von einer oder mehreren Schaltflächen, die jeweils durch einen Schaltflächen-Identifikator identifiziert werden, der mit einem entsprechenden Einzel-Datenelement-Deskriptor und mit dem bestimmten Master-Datenelement-Deskriptor assoziiert ist, der in der genannten ersten Datenbank gespeichert ist, wobei jede Schaltfläche konfiguriert ist, um durch eine Benutzerbedienung einer Eingabevorrichtung aktiviert zu werden;
bei bzw. nach (*upon*) der Aktivierung einer Schaltfläche durch einen Benutzer, vorlegen des genannten Schaltflächen-Identifikators als Anfrage an die genannte erste Datenbank, um das genannte oder die genannten ersten Datenelemente zu lesen, die mit dem genannten Einzel-Datenelement-Deskriptor verknüpft sind, der dem genannten Schaltflächen-Identifikator der genannten aktivierten Schaltfläche entspricht; und
hinzufügen von Daten, die vom genannten Lesen des oder der ersten Datenelemente abgeleitet werden, zum genannten Formular.

13. Das Computerprogrammprodukt nach Anspruch 12, das auf einem computerlesbaren Informationsträger-Medium (170) gespeichert wird.

## Revendications

1. Un système mis en oeuvre par ordinateur pour créer un document électronique, ledit document étant généré en se basant sur des données ajoutées à un formulaire électronique (50) par un utilisateur par l'interaction avec un ordinateur, ledit système étant programmé pour effectuer les étapes consistant à :
(a) afficher un premier affichage écran sur un dispositif de sortie graphique (150), ledit premier affichage écran incluant une zone d'entrée agencée de manière à permettre à un utilisateur d'entrer par un dispositif d'entrée (140) un ou plusieurs descripteurs de sujet principal (*master item descriptors*) et, en association avec chaque descripteur de sujet principal, un ou plusieurs descripteurs de poste individuel (*line item descriptors*), et un ou plusieurs premiers éléments de donnée en association avec chacun parmi un ou plusieurs descripteurs de poste individuel ;
envoyer chaque premier élément de donnée entré afin qu'il soit mémorisé dans une première base de données en relation à son descripteur de poste individuel associé et à son descripteur de sujet principal associé ;
(b) afficher un deuxième affichage écran sur un dispositif de sortie graphique, ledit deuxième affichage écran incluant ledit formulaire (50) et étant agencé de manière à permettre à un utilisateur d'ajouter des données audit formulaire (50) lorsqu'un descripteur de sujet principal spécifique parmi le ou les descripteurs de sujet principal à été appelé par l'utilisateur ;
afficher dans ledit deuxième affichage écran un ou plusieurs boutons de commande (54), dont chacun est identifié par un identificateur de bouton associé à un respectif descripteur de poste individuel et au descripteur de sujet principal spécifique mémorisé dans ladite première base de données, chaque bouton de commande (54) étant configuré de manière à être activé par une intervention d'utilisateur sur un dispositif d'entrée (140) ;
lors d'une activation d'un bouton de commande (54) par un utilisateur, soumettre ledit identificateur de bouton sous forme de requête, à ladite première base de données, pour lire ledit ou lesdits premiers éléments de donnée associés audit descripteur de poste individuel correspondant audit identificateur de bouton dudit bouton de commande (54) activé ; et
ajouter audit formulaire (50) des données dérivées de ladite lecture dudit ou desdits premiers éléments de donnée.

2. Le système d'après la revendication 1, programmé pour afficher plusieurs boutons de commande (54) en tant que ligne de boutons.

3. Le système d'après la revendication 1 ou 2, programmé pour afficher des textes de bouton à proximité de ou en une relation de superposition avec chaque bouton affiché.

4. Le système d'après une des revendications précédentes, programmé pour afficher ledit premier affichage écran sous forme de vue tabulaire incluant une pluralité de champs de saisie arrangés en lignes et colonnes pour entrer lesdits premiers éléments de donnée.

5. Le système d'après une des revendications précédentes, programmé pour effectuer, lors d'une activation d'un bouton de commande, l'étape consistant à effectuer une récupération directe d'un ou de plusieurs premiers éléments de donnée associés au descripteur de poste individuel correspondant au identificateur de bouton dudit bouton de commande activé, à partir de ladite première base de données, et ajouter ledit ou lesdits premiers éléments de donnée récupérés audit formulaire (50).

6. Le système d'après une des revendications précédentes, sachant que ladite zone de saisie dudit premier affichage écran inclut au moins un champs de saisie de renvoi pour chaque descripteur de poste individuel, ledit champs de saisie de renvoi permettant l'entrée, de la part d'un utilisateur, d'un premier élément de données en tant qu'élément de données de renvoi faisant référence à une information mémorisée dans une deuxième base de données ; et sachant que ledit système est programmé pour soumettre, lors de la lecture d'un élément de données de renvoi dans ladite première base de données, une requête à ladite deuxième base de données pour récupérer ladite information à laquelle ledit élément de données de renvoi fait référence, et ajouter ladite information récupérée de la deuxième base de données audit formulaire (50).

7. Le système d'après la revendication 6, programmé pour afficher un troisième affichage écran sur un dispositif de sortie graphique (150), ledit troisième affichage écran incluant un champ de saisie agencé de manière à permettre à l'utilisateur d'entrer une liste de descripteurs de sujet principal.

8. Le système d'après la revendication 7, programmé pour afficher ledit troisième affichage écran sous forme de vue tabulaire agencée de manière à permettre l'entrée desdits descripteurs de sujet principal et un ou plusieurs deuxièmes éléments de donnée en relation à chaque descripteur de sujet principal, sachant que ledit système est en outre programmé pour effectuer une mémorisation, dans ladite première base de données, de chaque deuxième élément de donnée en relation à son descripteur de sujet principal associé.

9. Le système d'après la revendication 8, sachant que ledit troisième affichage écran est agencé de manière à permettre à l'utilisateur d'entrer, pour chaque descripteur de sujet principal, un identificateur actif en tant que deuxième élément de donnée, ledit identificateur actif spécifiant si le respectif descripteur de sujet principal se trouve dans un état actif ; et sachant que ledit système est en outre programmé pour effectuer, en réponse à un utilisateur sélectionnant un descripteur de sujet principal spécifique, l'affichage d'un bouton de commande (54) pour chaque descripteur de poste individuel associé au descripteur de sujet principal sélectionné dans ledit deuxième affichage écran uniquement si ledit identificateur actif associé au descripteur de sujet principal sélectionné indique ledit état actif pour ce descripteur de sujet principal.

10. Le système d'après la revendication 9, sachant que ledit troisième affichage écran est agencé de manière à permettre à l'utilisateur d'entrer pour chaque descripteur de sujet principal un identificateur de version en tant que deuxième élément de donnée, ledit identificateur de version spécifiant un numéro de version du respectif descripteur de sujet principal.

11. Un procédé mis en oeuvre par ordinateur pour créer un document électronique, ledit document étant généré en se basant sur des données ajoutées à un formulaire électronique par un utilisateur par l'interaction avec un ordinateur, ledit procédé incluant les étapes consistant à :
(a) afficher (11) un premier affichage écran sur un dispositif de sortie graphique, ledit premier affichage écran incluant une zone d'entrée agencée de manière à permettre à un utilisateur d'entrer par un dispositif d'entrée un ou plusieurs descripteurs de sujet principal (*master item descriptors*) et, en association avec chaque descripteur de sujet principal, un ou plusieurs descripteurs de poste individuel (*line item descriptors*)*,* et un ou plusieurs premiers éléments de donnée en association avec chacun parmi un ou plusieurs descripteurs de poste individuel ;
envoyer (13) chaque premier élément de donnée entré afin qu'il soit mémorisé dans une première base de données en relation à son descripteur de poste individuel associé et à son descripteur de sujet principal associé ;
(b) afficher (21) un deuxième affichage écran sur un dispositif de sortie graphique, ledit deuxième affichage écran incluant ledit formulaire et étant agencé de manière à permettre à un utilisateur d'ajouter des données audit formulaire lorsqu'un descripteur de sujet principal spécifique parmi le ou les descripteurs de sujet principal à été appelé par l'utilisateur ;
afficher (22) dans ledit deuxième affichage écran un ou plusieurs boutons de commande, dont chacun est identifié par un identificateur de bouton associé à un respectif descripteur de poste individuel et au descripteur de sujet principal spécifique mémorisé dans ladite première base de données, chaque bouton de commande étant configuré de manière à être activé par une intervention d'utilisateur sur un dispositif d'entrée ;
lors d'une activation d'un bouton de commande par un utilisateur, soumettre (24) ledit identificateur de bouton sous forme de requête à ladite première base de données pour lire ledit ou lesdits premiers éléments de donnée associés audit descripteur de poste individuel correspondant audit identificateur de bouton dudit bouton de commande activé ; et
ajouter (29) audit formulaire des données dérivées de ladite lecture dudit ou desdits premiers éléments de donnée.

12. Un produit programme d'ordinateur pour créer un document électronique, ledit document étant généré en se basant sur des données ajoutées à un formulaire électronique par un utilisateur par l'interaction avec un ordinateur, ledit produit programme d'ordinateur comprenant :
une première portion de code de programme agencée pour réaliser le fait de:
(a) afficher un premier affichage écran sur un dispositif de sortie graphique, ledit premier affichage écran incluant une zone d'entrée agencée de manière à permettre à un utilisateur d'entrer par un dispositif d'entrée un ou plusieurs descripteurs de sujet principal (*master item descriptors*) et, en association avec chaque descripteur de sujet principal, un ou plusieurs descripteurs de poste individuel (*line item descriptors*), et un ou plusieurs premiers éléments de donnée en association avec chacun parmi un ou plusieurs descripteurs de poste individuel ;
envoyer chaque premier élément de donnée entré afin qu'il soit mémorisé dans une première base de données en relation à son descripteur de poste individuel associé et à son descripteur de sujet principal associé ; et
une deuxième portion de code de programme agencée pour réaliser le fait de:
(b) afficher un deuxième affichage écran sur un dispositif de sortie graphique, ledit deuxième affichage écran incluant ledit formulaire et étant agencé de manière à permettre à un utilisateur d'ajouter des données audit formulaire lorsqu'un descripteur de sujet principal spécifique parmi le ou les descripteurs de sujet principal à été appelé par l'utilisateur ;
afficher dans ledit deuxième affichage écran un ou plusieurs boutons de commande, dont chacun est identifié par un identificateur de bouton associé à un respectif descripteur de poste individuel et au descripteur de sujet principal spécifique mémorisé dans ladite première base de données, chaque bouton de commande étant configuré de manière à être activé par une intervention d'utilisateur sur un dispositif d'entrée ;
lors d'une activation d'un bouton de commande par un utilisateur, soumettre ledit identificateur de bouton sous forme de requête à ladite première base de données pour lire ledit ou lesdits premiers éléments de donnée associés audit descripteur de poste individuel correspondant audit identificateur de bouton dudit bouton de commande activé ; et
ajouter audit formulaire des données dérivées de ladite lecture dudit ou desdits premiers éléments de donnée.

13. Le produit programme d'ordinateur d'après la revendication 12, mémorisé dans un support porteur d'informations (170) lisible par ordinateur.
